# EUROPÄISCHE PATENTANMELDUNG

(11) **EP 4 657 699 A1**
(43) Veröffentlichungstag der Anmeldung: **03.12.2025**
(21) Anmeldenummer: 24178601.1
(22) Anmeldetag: 28.05.2024
(51) Int. Cl.: H02J 3/38, H02J 13/00, H02J 3/42, H02J 3/44, H02J 3/46

(54) **VERFAHREN ZUR INBETRIEBNAHME EINES STROMVERSORGUNGSSYSTEMS UND STROMVERSORGUNGSSYSTEM**

(71) Anmelder: Schweizerische Bundesbahnen SBB, 3000 Bern (CH)
(72) Erfinder: BOSCH, Julius, 4600 Olten (CH); WYMANN, Tino, 3052 Zollikofen (CH); BÜTTNER, Reto, 8840 Einsiedeln (CH); SCHAAD, Thomas, 4538 Oberbipp (CH)
(74) Vertreter: Rutz & Partner

(57) **Zusammenfassung**

Das Verfahren dient der Inbetriebnahme eines Stromversorgungssystems (SVS), das ein Versorgungsnetz (VN) mit wenigstens einer Stromleitung (LS) aufweist, an die wenigstens eine erste und ein zweite Erzeugereinheit (EE1, EE2) zuschaltbar sind, wobei die die erste Erzeugereinheit (EE1) einen ersten Stromerzeuger (E-G1; E-Ul), der über einen ersten Leistungsschalter (S-G1; S-U1) an die Stromleitung (LS) anschliessbar ist, eine erste Messvorrichtung (M1), die an die Stromleitung (LS) angeschlossen oder anschliessbar ist, und eine erste Steuereinheit (C-G1; C-U1) umfasst, die mit einem Signalausgang der ersten Messvorrichtung (M1) verbunden und zur Betätigung des ersten Leistungsschalters (S-G1; S-U1) vorgesehen ist, und die zweite Erzeugereinheit (EE2) einen zweiten Stromerzeuger (E-G2; E-U2), der über einen zweiten Leistungsschalter (S-G2; S-U2) an die Stromleitung (LS) anschliessbar ist, eine zweite Messvorrichtung (M2), die an die Stromleitung (LS) angeschlossen oder anschliessbar ist, und eine zweite Steuereinheit (C-G2; C-U2) umfasst, die mit einem Signalausgang der zweiten Messvorrichtung (M2) verbunden und zur Betätigung des zweiten Leistungsschalters (S-G2; S-U2) vorgesehen ist. Zur Inbetriebnahme des Stromversorgungssystems (SVS) ist erfindungsgemäss vorgesehen, dass
- die erste oder die zweite Steuereinheit (C-G1; C-U1) den ersten Stromerzeuger (E-G1; E-Ul) nach einer Freigabe als Führungserzeuger an die Stromleitung (LS) anschliesst und entlang eines Anfahrprofils (ap) hochfährt, und
- dass die zweite Steuereinheit (C-G2; C-U2) anhand der zweiten Messvorrichtung (M2) Spannungsänderungen auf der Stromleitung (LS) hinsichtlich des Auftretens eines Anfahrprofils (ap) überwacht und nach Detektion eines Anfahrprofils (ap) den zweiten Stromerzeuger (E-G2; E-U2) mit dem detektierten Anfahrprofil (ap) synchronisiert und nach erfolgter Synchronisation als Folgeerzeuger an die Stromleitung (LS) anschliesst, oder umgekehrt.

## Beschreibung

Die Erfindung betrifft ein Verfahren zur Inbetriebnahme eines Stromversorgungssystems, das ein Versorgungsnetz mit wenigstens einer Stromleitung aufweist, an die wenigstens zwei Stromerzeuger zuschaltbar sind. Insbesondere dient das Verfahren dem Hochfahren der Netzspannung des Versorgungsnetzes nach einem Netzausfall.

Moderne Versorgungsnetze weisen eine hohe Verfügbarkeit und eine hohe Stabilität hinsichtlich Spannung und Frequenz auf. Stromausfälle treten selten auf, haben im Ereignisfall oft aber schwerwiegende finanzielle und gesellschaftliche Auswirkungen. Besonders kritisch sind Stromausfälle auch in Versorgungsnetzen, die von Eisenbahnsystemen genutzt werden. Damit der Bahnverkehr nicht zum Erliegen kommt und Fahrpläne ohne grössere Eingriffe und Verzögerungen aufrechterhalten werden können, soll der vollständige Netzausfall (Blackout) oder der teilweise Netzausfall (Brownout) möglichst kurz sein. Nach einem Stromausfall soll der Netzwiederaufbau rasch erfolgen.

Routinen zur Gewährleistung der Netzsicherheit sind bereits weit ausgebaut. Störfälle, beispielsweise verursacht durch Blitzschläge, können in der Regel behandelt werden, ohne dass mit längeren Stromausfällen zu rechnen ist. Kritisch ist hingegen das gleichzeitige Auftreten mehrerer Störfälle. In [1], Interim Report into the Low Frequency Demand Disconnection (LFDD) following Generator Trips and Frequency Excursion on 9 Aug 2019, der nationalgridESO, England vom 19.08.2019 ist ein Störfall beschrieben, bei dem nach einem Blitzschlag zwei Stromerzeuger gleichzeitig vom Netz gingen und die Netzfrequenz den zulässigen Bereich von 49.5 Hz - 50.5 Hz unterschritt und bei 48.8 Hz alle verfügbare «backup power» zugeschaltet wurde. Das Überwachungssystem schaltete automatisch Kunden im Verteilnetz kontrolliert und in Übereinstimmung mit den von den Netzbetreibern vorgegebenen Parametern ab. In diesem Fall wurden rund 5% des Strombedarfs in Grossbritannien abgeschaltet, um die anderen 95% zu schützen. Von den Abschaltungen betroffen war insbesondere auch das Versorgungsnetz der Eisenbahnen.

In [2], A. Pandey, SUGAR-R: Robust Online Restoration Platform for SCADA-Absent Grid, Electrical and Computer Engineering Department, Carnegie Mellon University, Pittsburgh, 2019, ist beschrieben, dass die Wiederherstellung von Versorgungsnetzen während eines Stromausfalls üblicherweise mit Hilfe des zentralen Kontrollsystems SCADA (Supervisory Control and Data Acquisition System) erfolgt. Weiter ist ausgeführt, dass SCADA und das zentrale Energiemanagementsystem EMS (Energy Management System) selbst störungsanfällig sind und beispielsweise aufgrund von Cyber-Attacken ausfallen, oder schlimmer noch, kompromittiert werden können.

Die beschriebenen Systeme verwenden somit ein funktionierendes Leit- und Kontrollsystem, mittels dessen das Stromversorgungssystem zentral gesteuert und in Betrieb gesetzt wird. Bei einem Ausfall des zentralen Leit- und Kontrollsystems ist dieses in einem ersten Schritt wieder instand zu stellen, wonach die Inbetriebnahme des Versorgungsnetzes erfolgen kann.

Gegebenenfalls ist eine Kommunikation zwischen Erzeugereinheiten, wie Generatorsätzen oder Einheiten mit einem Umrichter und Umformer, zu erstellen, um diese zu synchronisieren.

Die Inbetriebnahme des Versorgungsnetzes nach einem Netzausfall, der gegebenenfalls durch Ausfall des Steuersystems verursacht wurde, und einen Aufbau des Steuersystems und/oder der Kommunikation zwischen Erzeugereinheiten erfordert, kann daher relativ viel Zeit in Anspruch nehmen.

Der vorliegenden Erfindung liegt daher die Aufgabe zugrunde, ein verbessertes Verfahren zur vollständigen oder teilweisen Inbetriebnahme eines Stromversorgungssystems und ein nach diesem Verfahren arbeitendes verbessertes Stromversorgungssystem anzugeben.

Das erfindungsgemässe Verfahren soll es erlauben, nach einem vollständigen oder teilweisen Systemausfall, insbesondere einem Netzausfall, eine Inbetriebnahme ausgefallener Systemteile rasch zu vollziehen und die Netzspannung am Versorgungsnetz unverzüglich wieder zu erstellen.

Die Inbetriebnahme des Stromversorgungssystems soll insbesondere nach Ausfall des zentralen Steuersystems, wie eines Energiemanagementsystems EMS oder Kontrollsystems SCADA und/oder nach Ausfall von Kombinationsverbindungen vom zentralen Steuersystem zu den Erzeugereinheiten oder von Kommunikationsverbindungen zwischen den Erzeugereinheiten erfolgen können, ohne dass diese Systeme zuvor instandgesetzt werden müssen.

Bei auftretenden Überlastungen des zentralen Steuersystems soll durch dessen Entlastung ein Systemausfall verhindert werden können. Überlastungen und Störungen des Steuersystems gegebenenfalls durch Cyberangriffe soll wirksam begegnet werden. Die erfindungsgemässen Massnahmen sollen es somit erlauben, die Robustheit und Zuverlässigkeit des Stromversorgungssystems zu verbessern.

In Störungssituationen, beispielsweise beim Ausfall eines oder mehrerer Stromerzeuger soll einem «Brownout» wirksam begegnet werden. Beim Auftreten eines teilweisen oder vollständigen »Blackout« soll der Netzwiederaufbau vorzugsweise automatisch und innerhalb kurzer Zeit erfolgen können.

Das Stromversorgungssystem soll nach einem teilweisen oder vollständigen Netzausfall autonom oder selbsttätig wieder hochfahren. Das erfindungsgemässe Verfahren soll das Personal im Falle einer Störung oder eines teilweisen oder vollständigen Netzausfall vollständig oder zumindest wesentlich entlasten.

Das erfindungsgemässe Verfahren soll mit einfachen Massnahmen und Mitteln realisiert werden können, so dass das verbesserte Stromversorgungssystem mit geringem Aufwand realisiert werden kann.

Netzelemente des Versorgungsnetzes sollen bedarfsweise steuerbar oder an das Versorgungsnetz zuschaltbar oder davon trennbar sein, sodass alle Steuerungsaufgaben nach oder während Störungsfällen den Umständen entsprechend optimal erfüllt werden können.

Das erfindungsgemässe Verfahren soll dabei auch in bereits installierten Stromversorgungssystemen und Erzeugereinheiten implementiert werden können.

Die Lösung dieser Aufgabe gelingt einem Verfahren nach Anspruch 1 und einem Stromversorgungssystem nach Anspruch 15. Vorteilhafte Ausgestaltungen der Erfindung sind in weiteren Ansprüchen definiert.

Das Verfahren dient der vollständigen oder teilweisen Inbetriebnahme eines Stromversorgungssystems, das ein Versorgungsnetz mit wenigstens einer Stromleitung aufweist, an die wenigstens eine erste und ein zweite Erzeugereinheit und optional eine oder mehrere Lasten und/oder einer oder mehrere Transformatoren zuschaltbar sind, wobei
- die erste Erzeugereinheit wenigstens einen ersten Stromerzeuger, der über einen ersten Leistungsschalter an die Stromleitung anschliessbar ist, eine erste Messvorrichtung, die an die Stromleitung angeschlossen oder anschliessbar ist, und eine erste Steuereinheit umfasst, die mit einem Signalausgang der ersten Messvorrichtung verbunden und zur Betätigung des ersten Leistungsschalters vorgesehen ist, und
- die zweite Erzeugereinheit wenigstens einen zweiten Stromerzeuger, der über einen zweiten Leistungsschalter an die Stromleitung anschliessbar ist, eine zweite Messvorrichtung, die an die Stromleitung angeschlossen oder anschliessbar ist, und eine zweite Steuereinheit umfasst, die mit einem Signalausgang der zweiten Messvorrichtung verbunden und zur Betätigung des zweiten Leistungsschalters vorgesehen ist.

Erfindungsgemäss ist vorgesehen, dass zur Inbetriebnahme des Stromversorgungssystems
- die erste Steuereinheit den ersten Stromerzeuger in Betriebsbereitschaft versetzt und nach einer Freigabe als Führungserzeuger an die Stromleitung anschliesst und entlang eines Anfahrprofils hochfährt, und
- dass die zweite Steuereinheit anhand der zweiten Messvorrichtung Spannungsänderungen auf der Stromleitung hinsichtlich des Auftretens eines Anfahrprofils überwacht und nach Detektion eines Anfahrprofils den zweiten Stromerzeuger mit dem detektierten Anfahrprofil synchronisiert und nach erfolgter Synchronisation als Folgeerzeuger an die Stromleitung anschliesst, oder
   dass zur Inbetriebnahme des Stromversorgungssystems
- die zweite Steuereinheit den zweiten Stromerzeuger nach einer Freigabe als Führungserzeuger an die Stromleitung anschliesst und entlang eines Anfahrprofils hochfährt, und
- dass die erste Steuereinheit anhand der ersten Messvorrichtung Spannungsänderungen auf der Stromleitung hinsichtlich des Auftretens eines Anfahrprofils überwacht und nach Detektion eines Anfahrprofils den ersten Stromerzeuger mit dem detektierten Anfahrprofil synchronisiert und nach erfolgter Synchronisation als Folgeerzeuger an die Stromleitung anschliesst.

Nach Anschluss wenigstens eines Folgeerzeugers an die Stromleitung werden der Führungserzeuger und der wenigstens eine Folgeerzeuger synchron betrieben. Die Netzspannung wird nach Zuschaltung der synchronisierten Folgeerzeuger in Frequenz und Phase und vorzugsweise mit derselben oder weitgehend derselben Spannungsamplitude gemeinsam hochgefahren. Unterschiede der Spannungsamplituden erlauben es, die Last beim Hochfahren der Netzspannung des Netzes nach Bedarf auf die zugeschalteten Stromerzeuger individuell zu verteilen.

Falls die Kommunikation zwischen zwei oder mehreren Steuereinheiten intakt ist oder falls eine Steuereinheit mehrere Stromerzeuger steuert, kann ein Startzeitpunkt für das gemeinsame synchrone Hochfahren mehrerer Stromerzeuger vereinbart oder vorgesehen werden. Nach Freigabe werden diese Stromerzeuger von den zugeordneten Steuereinheiten zum vereinbarten Startzeitpunkt gemeinsam als Führungserzeuger an die Stromleitung angeschlossen und entlang eines gemeinsamen Anfahrprofils synchron hochgefahren. Die weiteren Stromerzeuger, die das gemeinsame Anfahrprofil detektieren, synchronisieren sich mit diesem Anfahrprofil und werden nach der Synchronisation zugeschaltet.

Von den Folgeerzeugern werden die gemeinsam gestarteten und synchron laufenden Führungserzeuger typischerweise als ein einzelner Führungserzeuger wahrgenommen, weshalb das erfindungsgemässe Verfahren mit einem Führungserzeuger oder mehreren synchronisierten Führungserzeugern, die ein Anfahrprofil vollständig durchlaufen, in gleicher Weise durchführbar ist.

Das Stromversorgungssystem weist vorzugsweise ein zentralisiert angeordnetes Steuersystem, ein EMS oder SCADA, auf, durch das die Erzeugereinheiten im Normalbetrieb steuerbar sind. Sofern das Steuersystem aktiv und nicht gestört ist, steht das Stromversorgungssystem vorzugsweise unter der Kontrolle des zentralen Steuersystems. Beim Auftreten von Störungen im Steuersystem oder Überlastungen ist vorzugsweise eine teilweise oder vollständige Übergabe der Kontrolle vom zentralen Steuersystem gesamthaft oder selektiv an die dezentral angeordneten Steuereinheiten durchführbar. Ausserdem ist eine teilweise oder selektive dezentrale Steuerung möglich, wenn das zentrale Steuersystem nicht verändert werden soll, oder keine Kommunikationslinien vorhanden sind.

Bei einem Ausfall des zentralen Steuersystems ist vorgesehen, dass die dezentralen Steuereinheiten automatisch aktiv werden und das erfindungsgemässe Verfahren zur Inbetriebnahme des Versorgungsnetzes nach einem Netzausfall automatisch durchführen. Die Spannung am Versorgungsnetz kann daher mit nur minimalen zeitlichen Verzögerungen wieder erstellt werden.

Das Verfahren dient somit der teilweisen oder vollständigen Inbetriebnahme oder gegebenenfalls auch der Steuerung des Stromversorgungssystems insbesondere in Fällen, in denen das zentrale Steuersystem überlastet oder zumindest teilweise ausgefallen ist oder die Kontrolle an die dezentralen Steuereinheiten übergeben hat. Ausserdem kann das Verfahren genutzt werden, wenn keine zentrale Steuerung vorgesehen ist oder diese nicht verändert werden soll.

Das Stromversorgungssystem wird nach einem Netzausfall oder Systemausfall, insbesondere bei einem Ausfall des Steuersystems, durch die dezentralen Steuereinheiten mit minimaler zeitlicher Verzögerung wieder in Betrieb genommen. Vorzugsweise parallel dazu wird das zentrale Steuersystem wieder instand gesetzt, sodass die Kontrolle von den dezentralen Steuereinheiten beispielsweise nach der Inbetriebnahme des Stromversorgungssystems wieder an das zentrale Steuersystem übergeben werden kann.

Das Stromversorgungssystem umfasst wenigstens ein Versorgungsnetz, das eine einzige Netzebene mit einer vorgegebenen Netzspannung oder das wenigstens eine erste Netzebene mit einer höheren Spannung von beispielsweise 132 kV und wenigstens eine zweite Netzebene mit einer tieferen Spannung von beispielsweise 15 kV aufweist. Die Frequenzen und Spannungen auf den verschiedenen Netzebene können identisch oder unterschiedlich sein. Auf der ersten Netzebene ist beispielsweise eine Netzfrequenz von 50 Hz vorgesehen, während die zweite Netzebene eine Netzfrequenz von beispielsweise etwa 16 Hz aufweist. Eine oder mehrere Netzebenen können auch als Gleichstromnetz mit entsprechender Gleichspannung (Frequenz = 0) realisiert sein.

Insbesondere dient das erfindungsgemässe Verfahren der Inbetriebnahme des Versorgungsnetzes nach einem Netzausfall auf der zweiten Netzebene, die beispielsweise durch Erzeugereinheiten mit Generatoren, wie Synchronmaschinen oder Asynchronmaschinen, und/oder Erzeugereinheiten mit Umrichtern oder Umformern, die mit der ersten und der zweiten Netzebene verbunden sind, mit elektrischer Energie versorgt wird oder dem Netz Energie entzieht. Die Umrichter und Umformer erlauben es, eine eingangsseitig anliegende erste Spannung und/oder eine erste Frequenz einer ersten Netzebene ausgangsseitig auf eine zweite Spannung und/oder eine zweite Frequenz einer zweiten Netzebene umzusetzen und die ausgangsseitig abgegebene Spannung entlang einem Anfahrprofil, typischerweise entlang einer linearen Rampe hochzufahren.

Im Stromversorgungssystem sind Netzelemente vorgesehen, die durch das zentrale Steuersystem und/oder durch die dezentralen Steuereinheiten steuerbar, zuschaltbar oder abschaltbar sind. Erfindungsgemäss sind Netzelemente, ohmsche Lasten, Impedanzen, Spulen, Transformatoren oder Kondensatoren, durch die dezentralen Steuereinheiten derart steuerbar, zuschaltbar oder abschaltbar, dass die Inbetriebnahme des Stromversorgungssystems und das Hochfahren der Spannung des Versorgungsnetzes unter Vermeidung von Überlastungen und Vermeidung von hohen Einschaltströmen ungestört erfolgen kann. Insbesondere sollen durch das Anfahrprofil mit ansteigender Spannung störende Einschaltstromstösse vermieden oder reduziert werden.

Netzelemente sind beispielsweise Lasten, wie elektrische Heizungen, Beleuchtungen oder elektrische Antriebe, und/oder Transformatoren und/oder Kondensatoren, die durch Schaltelemente an die erste Netzebene oder die zweite Netzebene anschaltbar und davon trennbar sind. Beispielsweise umfasst die zweite Netzebene Fahrleitungen eines Eisenbahnsystems, über die Eisenbahnzüge mit Strom versorgt werden. Heizungen und Beleuchtungen werden beispielsweise vollständig oder selektiv abgeschaltet oder auf tiefere Werte gesteuert.

Vorzugsweise werden die Lasten und/oder Transformatoren und/oder Kondensatoren derart zugeschaltet oder abgeschaltet, dass das Hochfahren der Spannung erfolgreich erfolgen kann und unzulässige Belastungen, insbesondere unzulässig hohe Einschaltströme vermieden werden, oder dass Lasten und/oder Transformatoren vorzugsweise selektiv und priorisiert zugeschaltet werden, um störende Einschaltströme zu vermeiden. Weiterhin kann die Inbetriebnahme des Stromversorgungsnetzes derart erfolgen, dass kritische Abnehmer, beispielsweise Spitäler oder Kliniken, priorisiert wieder mit Energie versorgt werden.

In weiteren vorzugsweisen Ausgestaltungen wird vorgesehen, dass das Stromversorgungssystem oder das Versorgungsnetz in Segmente aufteilbar ist. Segmente, in denen Störungen aufgetreten sind, können daher isoliert werden. Die Segmentierung des Versorgungsnetzes erlaubt ferner, Segmente des Versorgungsnetzes vereinzelt hochzufahren und später zu einem Verbund wieder zusammenzuschalten. Segmente können selektiv hochgefahren werden, um priorisierte Abnehmer unverzüglich wieder mit elektrischer Energie zu versorgen. Entsprechende Pläne und Prioritäten sind in den dezentralen Steuereinheiten gespeichert.

Die Leistungsschalter mit denen die Stromerzeuger und/oder Lasten und/oder Transformatoren und/oder Kondensatoren an das Versorgungsnetz, insbesondere die wenigstens eine Stromleitung angeschlossen werden, können mechanische Schalter oder Halbleiterschalter sein und sind entsprechend, gegebenenfalls mittels Antriebseinheiten, steuerbar.

Die Stromleitung kann auch als Sammelschiene bezeichnet werden oder ausgebildet sein. Zur Segmentierung des Versorgungsnetzes kommen die Stromleitung in Segmente aufgeteilt werden, die durch Schalter oder Trenner voneinander trennbar und miteinander verbindbar sind. Schalter, die nicht unter Last betätigt werden, werden üblicherweise als Trenner bezeichnet.

Im Normalbetrieb werden die Erzeugereinheiten typischerweise vom zentralen Steuersystem in konventioneller Weise gesteuert, um die Netzspannung und die Netzfrequenz innerhalb vorgegebener Schranken zu halten oder um das Netz nach einem Ausfall wieder aufzubauen und das Versorgungsnetz wieder in Betrieb zu nehmen. Bei auftretenden Störungen, teilweisen Netzausfällen oder Überlastungen kann das Versorgungsnetz hingegen in einzelnen Segmente zerfallen, die nach dem erfindungsgemässen Verfahren automatisch wieder zu einem Verbund zusammengeführt werden.

Damit Stromerzeuger nach dem erfindungsgemässen Verfahren als Führungserzeuger oder als Folgeerzeuger agieren können, ist eine Bereitschaft oder Freigabe dieser Stromerzeuger erforderlich.

Erfindungsgemäss kann die Freigabe eines Stromerzeugers durch das zentrale Steuersystem erfolgen oder durch die zugeordnete Steuereinheit bestimmt werden. Sofern das zentrale Steuersystem noch funktionsfähig ist und einerseits einen Netzausfall und andererseits eine Systemstörung erkannt hat, kann die Freigabe durch das zentrale Steuersystem erfolgen, sodass in der Folge eine dezentrale Inbetriebnahme des Stromversorgungssystems oder zumindest ein dezentraler Aufbau des Versorgungsnetzes erfolgen kann. Sofern hingegen die Kommunikation mit dem zentralen Steuersystem vollständig ausgefallen ist, kann die Freigabe der Stromerzeuger durch die dezentral angeordneten Steuereinheiten bestimmt werden.

Zwingend oder fakultativ, vereinzelt oder kumulativ zu erfüllende Bedingungen für die Freigabe der Stromerzeuger sind beispielsweise,
a) dass der Stromerzeuger nicht bereits an die Stromversorgungsleitung angeschaltet ist; und/oder
b) dass das Versorgungsnetz keine Spannung aufweist; und/oder
c) dass der Stromerzeuger war für das Hochfahren der Netzspannung erforderlich und beispielsweise hinsichtlich des vorgegebenen Anfahrprofils geeignet ist; und/oder
d) dass keine Fehlermeldung des Stromerzeugers oder damit verbundener Anlagenteile vorliegt.

Damit jeweils nur einer der freigegebenen Stromerzeuger der Stromleitung als Führungserzeuger zugeschaltet wird, wird im Stromversorgungssystem vorzugsweise ein Zeitraster mit je durch ein Rasterintervall voneinander getrennten benachbarten Startzeitpunkten vorgesehen. Wesentlich ist, dass das Zeitraster in allen dezentralen Steuereinheiten zur Verfügung steht.

Erfindungsgemäss wird jedem der Stromerzeuger individuell eine nur einmal vergebene Folge von periodisch auftretenden Startzeitpunkten zugeordnet, die durch wenigstens zwei Rasterintervalle voneinander getrennt sind und die den Stromerzeugern je als Startzeitpunkte für das Anfahren als Führungserzeuger dienen. Sofern die Rasterzeitpunkte einer Folge je durch zwei Rasterintervalle voneinander getrennt sind, können zwei Stromerzeuger alternativ als Führungserzeuger starten. Entsprechend der Anzahl der Rasterintervalle zwischen zwei Startzeitpunkten kann daher eine entsprechende Anzahl an Stromerzeugern vorgesehen werden, die individuell als Führungserzeuger zuschaltbar sind.

Vorzugsweise sind in den Steuereinheiten vorzugsweise programmierbare Timer vorgesehen, welche die Startzeitpunkte für das Anfahren als Führungserzeuger signalisieren. Vorzugsweise ist ein externes Taktsignal oder Zeitsignal vorgesehen, das zur Synchronisierung der Timer der Steuereinheiten verwendet wird. Das Taktsignal oder Zeitsignal wird vorzugsweise über Funk von einer Funkuhr oder Atomuhr empfangen. Die Timer weisen vorzugsweise eine hohe Ganggenauigkeit auf, sodass eine periodische Synchronisation genügt und ein kurzzeitiger Ausfall des Taktsignals oder Zeitsignals unkritisch ist.

In vorzugsweisen Ausgestaltungen ist ein Schwellwert für die Spannungsänderungen auf der Stromleitung vorgesehen, dessen Überschreiten detektiert wird und nach dessen Überschreiten das Auftreten eines Anfahrprofils festgestellt wird. Dadurch wird verhindert, dass Synchronisationsvorgänge aufgrund von Störspannungen, die auf der Stromleitung unterhalb des Schwellenwerts auftreten, gestartet werden. Vorzugsweise wird auch geprüft, ob die Frequenz der auf der Stromleitung auftretenden Spannungen einem bestimmten Wert entspricht oder innerhalb vorgegebener Schranken liegt. Auch auf diese Weise werden unnötige Synchronisationsvorgänge vermieden.

In vorzugsweisen Ausgestaltungen umfassen die Steuereinheiten Filterelemente oder Filtergruppen, die es erlauben ein einheitlich oder individuell, gegebenenfalls situativ verwendetes Anfahrprofil präzise zu detektieren und gegebenenfalls dem Führungserzeuger zuzuordnen.

In vorzugsweisen Ausgestaltungen wird daher vorgesehen, dass für wenigstens einen Stromerzeuger eines oder mehrere Anfahrprofile wählbar oder wahlweise einstellbar sind.

Für eine bestimmte Konfiguration von unterschiedlichen Stromerzeugern kann daher ein passendes Anfahrprofil fest vorgegeben werden. Typischerweise werden die Anfahrprofile der Stromerzeuger an das Anfahrprofil des Stromerzeugers angepasst, welches die geringste Steigung oder die grösste Länge aufweist.

In vorzugsweisen Ausgestaltungen wird der Verlauf oder die Steigung der Spannungsänderungen auf der Stromleitung ermittelt und mit den Verläufen oder Steigungen von möglicherweise auf der Stromleitung auftretenden Anfahrprofilen der zuschaltbaren Stromerzeuger verglichen, um das aktuelle Anfahrprofil des Führungserzeugers zu identifizieren und das Anfahrprofil des wenigstens einen Folgeerzeugers dynamisch an das Anfahrprofil des Führungserzeugers anzupassen.

Diese Massnahme erlaubt es, Stromerzeuger je mit einem von mehreren Anfahrprofilen als Führungserzeuger an die Stromleitung anzuschalten, wobei jeweils eine dynamische Anpassung der Anfahrprofile der Folgeerzeuger erfolgt.

In weiteren vorzugsweisen Ausgestaltungen wird vorgesehen, dass die Zuschaltung eines Folgeerzeugers nur dann erfolgt, wenn ein passendes Anfahrprofil des Führungserzeugers detektiert wurde. Falls beispielsweise ein steiles und somit sehr kurzes Anfahrprofil detektiert wurde, werden vorzugsweise nur schnelle Folgeerzeuger zugeschaltet. Langsame Folgeerzeuger werden vorzugsweise erst dann zugeschaltet, wenn die Netzspannung vollständig hochgefahren ist. Sofern schnelle Folgeerzeuger nicht in genügender Anzahl zur Verfügung stehen und langsame Folgeerzeuger benötigt werden, so ist das Anfahrprofil des Führungserzeugers an das schnellste Anfahrprofil des langsamsten Folgeerzeugers anzupassen. Die Konfiguration des Stromversorgungssystems mit langsamen und schnellen Folgeerzeugern sowie die erforderliche Leistung zum Hochfahren des Versorgungsnetzes ist daher von den dezentralen Steuereinheiten vorgängig zu prüfen und festzulegen.

In vorzugsweisen Ausgestaltungen ist vorgesehen, dass zur Synchronisation des wenigstens einen Folgeerzeugers nach Detektion eines Anfahrprofils unter Berücksichtigung des Zeitrasters und der Art des Anfahrprofils der Startzeitpunkt des Anfahrprofils identifiziert, der Stand des Anfahrprofils ermittelt und der wenigstens eine Folgeerzeuger auf den ermittelten Stand des Anfahrprofils gebracht wird. Der Synchronisationsvorgang kann daher durch entsprechende Routinen unterstützt werden, sodass letztendlich möglicherweise nur noch die Synchronisation der Phasenlage mit einer gegebenenfalls geringfügigen Phasenkorrektur erforderlich ist.

Alternativ wird nach Detektion eines Anfahrprofils unter Berücksichtigung des Zeitrasters des Führungserzeugers, die dem Führungserzeuger zugehörige Art des Anfahrprofils sowie der Startzeitpunkt des Anfahrprofils identifiziert, der Stand des Anfahrprofils ermittelt und der wenigstens eine Folgeerzeuger auf den ermittelten Stand des Anfahrprofils gebracht.

Aufgrund der Identifikation des Anfahrprofils, gegebenenfalls nach Identifikation des Führungserzeugers und des zugehörigen Anfahrprofils, erlauben es diese Verfahrensschritte, den Stand des Anfahrprofils des Führungserzeugers, vorbehaltlich auftretender Toleranzen, mathematisch präzise zu ermitteln, sodass der Aufwand für physikalische Messungen und die Synchronisation wiederum auf ein Minimum reduziert werden kann.

Sofern alle Stromerzeuger dasselbe Anfahrprofil verwenden, kann der Startzeitpunkt des Führungserzeugers und des zugehörigen Anfahrprofils unmittelbar anhand des Zeitrasters ermittelt werden.

Sofern die Stromerzeuger unterschiedliche Anfahrprofile aufweisen, wird nach Detektion eines Anfahrprofils anhand des Zeitrasters der Führungserzeuger identifiziert und das diesem Führungserzeuger zugeordnete Anfahrprofil ermittelt. Nach Ermittlung des Anfahrprofils wird anhand des Zeitrasters der Startzeitpunkt des Führungserzeugers und somit des Anfahrprofils ermittelt.

Anhand des ermittelten Startzeitpunkts sowie des festgestellten einheitlichen oder individuellen Anfahrprofils kann in der Folge der Stand des Anfahrprofils präzise berechnet werden. Nach Ermittlung des Standes des Anfahrprofils des Führungserzeugers wird die Phase der von jedem Folgeerzeuger erzeugten Spannung an die Phase der vom Führungserzeuger erzeugten Spannung angepasst. Da der Stand des Anfahrprofils des Führungserzeugers berechnet werden konnte, sind gegebenenfalls keine oder nur minimale Anpassungen erforderlich.

In weiteren vorzugsweisen Ausgestaltungen ist vorgesehen,
a) dass das Rasterintervall derart gewählt ist, dass stets nur einer der Stromerzeuger als Führungserzeuger aktiv wird, oder
b) dass das Rasterintervall grösser ist als die Zeitdauer des Anfahrprofils des als Führungserzeuger dienenden Stromerzeugers, oder
c) dass das Rasterintervall grösser ist als die Zeitdauer, die abgelaufen ist, bevor das Anfahrprofil auf der Stromleitung detektierbar ist.

Erfindungsgemäss soll die Zuschaltung von zwei (nicht synchronisierten) Stromerzeugern als Führungserzeuger an die Stromleitung vermieden werden, da in einem solchen Fall keine Synchronisation der Wechselspannungen der Führungserzeuger vorliegt. Die Zuschaltung eines zweiten Führungserzeugers an die Stromleitung, nachdem bereits ein erster Stromerzeuger als Führungserzeuger an die Stromleitung angeschlossen wurde, kann mit verschiedenen Massnahmen auch dann verhindert werden, wenn zwischen den dezentralen Steuereinheiten keine Kommunikation besteht.

Indem die Länge des Rasterintervalls des Zeitrasters grösser gewählt wird als die Zeitdauer des Anfahrprofils des als Führungserzeuger dienenden Stromerzeugers, wird sichergestellt, dass das Hochfahren der Netzspannung erfolgen kann, bevor der Startzeitpunkt für den nächsten Stromerzeuger auftritt. Das Erreichen des Sollwerts der Netzspannung, kann für den wenigstens einen Folgeerzeuger festgestellt werden, sodass beim Auftreten des nächsten Startzeitpunkts ausgeschlossen ist, dass dieser als Führungserzeuger zugeschaltet wird. Sofern kein Stromerzeuger als Führungserzeuger der Stromleitung zugeschaltet wurde, resultiert bei dieser Wahl der Länge der Rasterintervalle eine relativ grosse Verzögerung bis der nächste Stromerzeuger als Führungserzeuger zugeschaltet werden kann.

Das Hochfahren des Netzes kann hingegen mit hoher Sicherheit auch schon zu einem früheren Zeitpunkt festgestellt werden, bevor die Netzspannung den Sollwert erreicht. Beispielsweise ist leicht detektierbar, wenn an der Stromleitung die halbe Netzspannung anliegt. Vorzugsweise wird die Länge des Rasterintervalls daher grösser gewählt als die Zeitdauer, die abgelaufen ist, bevor das Anfahrprofil auf der Stromleitung detektierbar ist, aber kleiner als die maximale Länge des Anfahrprofils des Führungserzeugers. Die Länge des Rasterintervalls wird beispielsweise derart gewählt, dass ein möglicherweise gestartetes Anfahrprofil eines Führungserzeugers den genannten oder einen weiteren Schwellenwert überschritten hat oder nach Überschreiten des Schwellwerts eine Verzögerungszeit abgelaufen ist. Durch die Verkürzung der Rasterintervalle kann das Hochfahren der Netzspannung nach einem Netzausfall entsprechend verkürzt werden.

Vorzugsweise wird die Länge der Rasterintervalle in Abhängigkeit der Art der Stromerzeuger oder der den Stromerzeugern zugeordneten Anfahrprofile individuell oder einheitlich gewählt, wobei das einheitlich gewählte Rasterintervall entsprechend dem Anfahrprofil festgelegt wird, dass die grösste Länge aufweist. Vorzugsweise wird das einheitliche Anfahrprofil jeweils an den jeweiligen Zustand des Stromversorgungssystems angepasst, wobei insbesondere die Art zugeschalteter oder abgeschalteter Stromerzeuger berücksichtigt wird.

In vorzugsweisen Ausgestaltungen der Erfindung sind Stromerzeuger mit einem kürzeren Anfahrprofil und Stromerzeuger mit einem längeren Anfahrprofil vorgesehen. Zur Inbetriebnahme des Stromversorgungssystems werden in einer ersten Phase vorzugsweise nur Stromerzeuger mit dem kürzeren Anfahrprofil verwendet. Stromerzeuger mit einem längeren Anfahrprofil werden in der Folge vorzugsweise erst synchronisiert und an die Stromleitung angeschlossen, wenn die Stromerzeuger mit einem kürzeren Anfahrprofil ihr Anfahrprofil ganz oder teilweise durchlaufen haben. Das Versorgungsnetz wird beispielsweise mittels Umrichtern oder Umformern möglichst rasch hochgefahren, wonach die langsameren Stromerzeuger, beispielsweise Synchronmaschinen oder Asynchronmaschinen, mit der finalen Netzspannung synchronisiert und anschliessend zugeschaltet werden.

Die Stromerzeuger werden vorzugsweise auf eine Spannung hochgefahren, die entsprechend ihrer Leistungsfähigkeit gewählt wird. Durch die Wahl der abgegebenen Spannungen kann eine gewünschte Lastverteilung zwischen den Stromerzeugern erzielt werden.

Für die Inbetriebnahme des Versorgungsnetzes sind insbesondere die Daten und Spezifikationen der dezentral angeordneten Erzeugereinheiten und Stromerzeuger, wie die Art und Länge der Anfahrprofile, die zugeordneten Startzeitpunkte oder die Leistungsdaten, relevant. Die Stromleitung kann eine beliebige Länge aufweisen, weshalb auch die Erzeugereinheiten in beliebigen Abständen voneinander angeordnet werden können.

Nachfolgend wird die Erfindung anhand von Zeichnungen näher erläutert. Dabei zeigt:

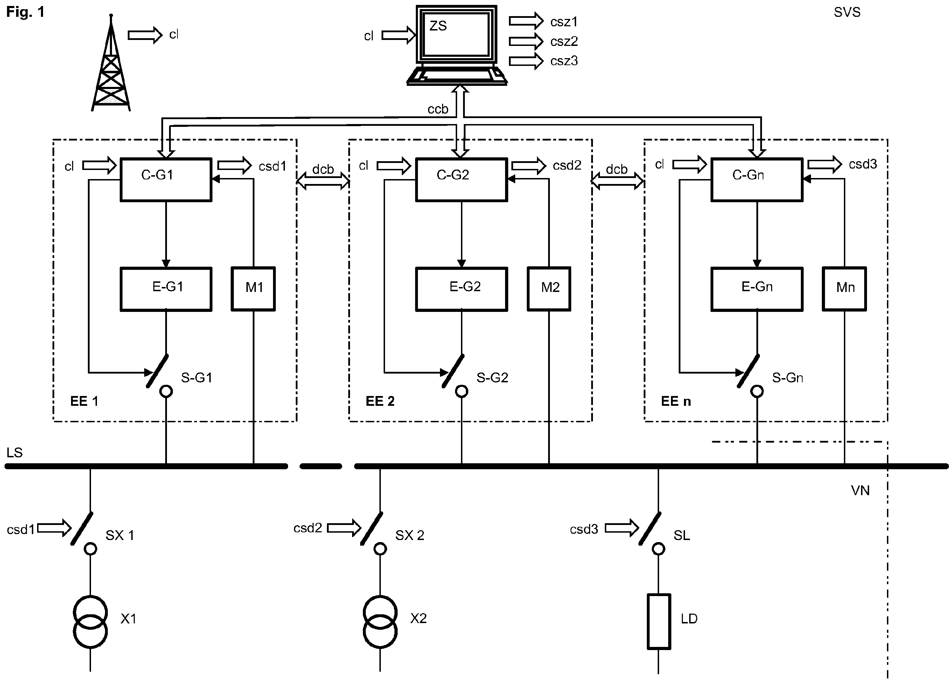

- Fig. 1: ein erfindungsgemässes Stromversorgungssystem SVS, das ein zentrales Steuersystem ZS, ein Versorgungsnetz VN mit wenigstens einer Stromleitung LS, und n Erzeugereinheiten EE1, EE2, EEn umfasst, die je eine dezentrale Steuereinheit C-G1, C-G2, C-Gn, einen Stromerzeuger E-G1, E-G2, E-Gn in der Ausgestaltung einer rotierenden Maschine, eine Messvorrichtung M1, M2, Mn und einen Leistungsschalter S-G1, S-G2, S-Gn aufweisen, der durch die zugehörige Steuereinheit C-G1, C-G2, C-Gn steuerbar ist und durch den der zugehörige Stromerzeuger E-G1, E-G2, E-Gn an die Stromleitung LS anschliessbar ist, über die elektrische Lasten LD und Transformatoren X1, X2 mit Strom versorgt werden;
- Fig. 2: das Stromversorgungssystem SVS von Fig. 1 ausgerüstet mit n Stromerzeugern E-U1, E-U2, E-Un in der Ausgestaltung von Umrichtern oder Umformern, die eingangsseitig an eine der Energieversorgung dienende Versorgungsleitung LSQ angeschlossen und ausgangsseitig über Leistungsschalter S-U1, S-U2, S-Un an die Stromleitung LS anschliessbar sind;
- Fig. 3: das Stromversorgungssystem SVS von Fig. 1 oder Fig. 2 mit einem Stromerzeuger E-G1 von Fig. 1 und n Stromerzeugern E-U1, E-Un von Fig. 2;
- Fig. 4: ein Anfahrprofil ap eines der Stromerzeuger E-G1, E-G2, E-Gn; E-U1, E-U2, E-Un von Fig. 1, Fig. 2 oder Fig. 3 und ein Zeitraster mit durch Rasterabstände ra voneinander getrennten Startzeitpunkten t_{E-U1}, t_{E-U1}, t_{E-U1}, t_{E-U1} für die Stromerzeuger E-U1, E-U2, E-Un; und
- Fig. 5: exemplarisch einen Ablauf der Inbetriebnahme des Stromversorgungssystems SVS von Fig. 3 nach dem erfindungsgemässen Verfahren.

Fig. 1 zeigt exemplarisch ein erfindungsgemässes Stromversorgungssystem SVS, das ein zentrales Steuersystem ZS, ein Versorgungsnetz VN mit wenigstens einer Stromleitung LS, und n Erzeugereinheiten EE1, EE2, EEn umfasst, von denen drei Einheiten gezeigt sind. Die Erzeugereinheiten EE1, EE2, EEn, welche die Stromleitung LS mit elektrischer Energie versorgen, können in beliebigen Abständen voneinander angeordnet sein. Weiterhin sind elektrische Lasten LD und Transformatoren X1, X2 vorgesehen, die durch zugehörige Schalter SL, SX1, SX2 mit der Stromleitung LS verbindbar sind. Über die Transformatoren X1, X2 wird beispielsweise eine weitere Netzebene mit elektrischer Energie versorgt.

Die Stromleitung LS ist symbolisch mit Unterbrüchen gezeigt, um zu zeigen, dass das Versorgungsnetz VN in vorzugsweisen Ausgestaltungen segmentiert werden kann, um Teilbereiche des Versorgungsnetzes VN, d. h. einzelne Segmente dezentral zu steuern. Das erfindungsgemässe Verfahren kann daher auch nur für ausgewählte Segmente des Versorgungsnetzes VN durchgeführt werden.

Die Erzeugereinheiten EE1, EE2, EEn umfassen je eine dezentrale Steuereinheit C-G1; C-G2; C-Gn, einen oder gegebenenfalls mehrere Stromerzeuger E-G1; EG2; E-Gn in der Ausgestaltung rotierender Maschinen, wie Synchronmaschinen oder Asynchronmaschinen, eine Messvorrichtung M1; M2; Mn und einen Leistungsschalter S-G1; S-G2; S-Gn, der durch die zugehörige Steuereinheit C-G1; C-G2; C-Gn steuerbar ist und durch den der zugehörige Stromerzeuger EG1; E-G2; E-Gn an die Stromleitung LS anschliessbar ist.

Das zentrale Steuersystem ZS ist über einen zentralen Datenbus ccb drahtlos oder drahtgebunden mit den Steuereinheiten C-G1, C-G2, C-Gn verbunden und zur unidirektionalen oder bidirektionalen Kommunikation mit den Steuereinheiten C-G1, C-G2, C-Gn vorgesehen. Das zentrale Steuersystem ZS ist in der Lage, die Erzeugereinheiten EE1, EE2, EEn wahlweise zu steuern, die Steuereinheiten C-G1, C-G2, C-Gn mit Daten zu versorgen und Informationen von den Steuereinheiten C-G1, C-G2, C-Gn abzurufen.

Die Erzeugereinheiten EE1, EE2, EEn werden beispielsweise in Abhängigkeit der Frequenz der Netzspannung zugeschaltet oder abgeschaltet. Eine sinkende Frequenz verweist auf eine Überlastung des Versorgungsnetzes VN, sodass zusätzliche Erzeugereinheiten EE1, EE2, EEn zugeschaltet werden. Sobald die Last sinkt, können einzelne Erzeugereinheiten EE1, EE2, EEn wieder abgeschaltet werden.

Vorzugsweise ist ein dezentraler Datenbus dcb vorgesehen, über den die dezentralen Steuereinheiten C-G1, C-G2, C-Gn direkt miteinander kommunizieren und ihre Daten austauschen können. Diese Kommunikation ist insbesondere dann von Vorteil, wenn die Verbindung zum zentralen Steuersystem ZS ausgefallen ist und die Steuerung des Stromversorgungsnetzes SVS dezentral erfolgt.

Vorzugsweise ist das Stromversorgungssystem SVS derart ausgebildet, dass dessen Kontrolle und Steuerung wahlweise durch das zentrale Steuersystem ZS oder durch die dezentralen Steuereinheiten C-G1, C-G2, C-Gn, die über den dezentralen Datenbus dcb miteinander kommunizieren, erfolgen kann.

Vorzugsweise sind die Daten aller Erzeugereinheiten EE1, EE2, EEn nicht nur im zentralen Steuersystem ZS, sondern auch in allen dezentralen Steuereinheiten C-G1, C-G2, C-Gn gespeichert. Bei jeder Änderung der Konfiguration des Stromversorgungssystems SVS werden die Daten vorzugsweise unverzüglich in allen Steuereinheiten C-G1, C-G2, C-Gn aktualisiert.

Die Schalter SL, SX1, SX2, mittels denen elektrische Lasten LD und Transformatoren X1, X2 mit der Stromleitung LS verbindbar sind, sind vorzugsweise sowohl vom zentralen Steuersystem ZS durch Steuersignale csz1, csz2, csz3 als auch von den lokal zugeordneten Steuereinheiten C-G1, C-G2, C-Gn durch Steuersignale csd1, csd2, csd3 steuerbar. Nach einem Netzausfall werden Lasten LD und Transformatoren X1, X2 vorzugsweise abgeschaltet, damit die Spannung bei geringer Belastung des Versorgungsnetzes VN wieder hochgefahren werden kann. Durch Trennung der Transformatoren X1, X2 wird das Auftreten hoher Einschaltströme vermieden. Sofern wesentlich ist, dass Verbraucher rasch wieder mit elektrischer Energie versorgt werden, können einzelne Lasten LD oder Transformatoren X1, X2 selektiv mit der Stromleitung LS verbunden bleiben. Sofern die entsprechenden Anforderungen in den Steuereinheiten C-G1, C-G2, C-Gn gespeichert sind, können diese Schaltungen auch von den Steuereinheiten C-G1, C-G2, C-Gn ausgeführt werden, falls das zentrale Steuersystem ZS die Kontrolle übergeben hat oder ausgefallen ist.

In dieser vorzugsweisen Ausgestaltung erhält das Stromversorgungssystem SVS ein Taktsignal oder Zeitsignal cl beispielsweise von einer Funkuhr oder Atomuhr. Alle intelligenten Komponenten des Stromversorgungssystems SVS, die zeitkritische Prozesse und/oder Programme abarbeiten, werden daher vorzugsweise mittels des Taktsignals oder Zeitsignals cl miteinander synchronisiert.

Die Synchronisation des Stromversorgungssystems SVS wird vorzugsweise auch dann aufrechterhalten, wenn Störungen im zentralen Steuersystem ZS und/oder in den Kommunikationsverbindungen zwischen den dezentralen Steuereinheiten C-G1, C-G2, C-Gn auftreten. Vorzugsweise sind in den dezentralen Steuereinheiten C-G1, C-G2, C-Gn Timer mit einer hohen Ganggenauigkeit vorgesehen, die auch nach dem Ausfall des Taktsignals noch über eine längere Zeit mit einer vernachlässigbaren Fehlerabweichung arbeiten. Das Stromversorgungssystem SVS wird daher vorzugsweise in allen Bereichen phasenkohärent betrieben. Beim phasenkohärenten Betrieb des Versorgungsnetzes werden die Phasen der von den Stromerzeugern erzeugten Spannungen vorzugsweise mit dem Zeitsignal synchronisiert.

Bei einem teilweisen oder vollständigen Ausfall des zentralen Steuersystems ZS und/oder einem Unterbruch der Kommunikationsverbindungen und einem Ausfall der Netzspannung im Versorgungsnetz VN, insbesondere auf der Stromleitung LS erfolgt die Inbetriebnahme des Stromversorgungssystems SVS dezentral durch die Steuereinheiten C-G1, C-G2, C-Gn.

Die Steuereinheiten C-G1, C-G2, C-Gn überwachen die Kommunikationsverbindungen mit dem zentralen Steuersystem ZS und gegebenenfalls den dezentralen Steuereinheiten C-G1, C-G2, C-Gn, die vorzugsweise Funktionsweise ausgebildet sind. Beispielsweise werden periodisch Überwachungssignale oder Watch dog Signale über die Kommunikationsleitungen ccb, dcb übertragen. Sobald die Überwachungssignale ausbleiben, erfolgt die Übernahme der Kontrolle durch die Steuereinheiten C-G1, C-G2, C-Gn.

Mittels der Messvorrichtungen M1, M2, M3 prüfen die Steuereinheiten C-G1, C-G2, C-Gn permanent, periodisch oder selektiv den Zustand der Netzspannung auf der Stromleitung LS. Weiterhin wird überprüft, ob die betreffenden Erzeugereinheiten EE1, EE2, EEn zur Durchführung des erfindungsgemässen Verfahrens berechtigt sind. Berechtigungen können beispielsweise vorab durch das zentrale Steuersystem ZS erteilt werden oder gemäss Vorgaben dynamisch bestimmt werden. Eine Berechtigung kann beispielsweise entfallen, wenn die zugehörige Steuereinheit C-G1, C-G2, C-Gn einen Fehler innerhalb der Erzeugereinheit EE1, EE2, EEn ermittelt hat oder falls festgestellt wird, dass die betreffende Erzeugereinheit EE1, EE2, EEn mit den weiteren Erzeugereinheiten EE1, EE2, EEn für die Inbetriebnahme des Versorgungsnetzes und das Hochfahren der Netzspannung nicht kompatibel ist. Weiterhin darf die betreffende Erzeugereinheit EE1, EE2, EEn nicht bereits der Stromleitung LS zugeschaltet sein. Sofern alle Bedingungen erfüllt sind und die Berechtigung vorliegt, erfolgt die individuelle Freigabe der Stromerzeuger E-G1, E-G2, E-Gn zur Durchführung des erfindungsgemässen Verfahrens.

Zur Vorbereitung der Inbetriebnahme des Stromversorgungssystems SVS wird das Versorgungsnetz gemäss vorgegebenen Instruktionen konfiguriert. Gemäss festen Vorgaben oder einem Konfigurationsprogramm, welches den Zustand des Stromversorgungssystems SVS, Bedarfsmeldungen und aktuelle Instruktionen prüft, werden Lasten LD oder Transformatoren X1, X2 von der Stromleitung LS abgeschaltet oder dieser selektiv zugeschaltet.

Nach Vorliegen der Freigabe und Abschluss der Vorbereitungen, die kaum Zeit in Anspruch nehmen, und gegebenenfalls Konfiguration oder Rücksetzung des Versorgungsnetzes schliesst eine erste Steuereinheit, beispielsweise die Steuereinheit C-Gn der Erzeugereinheit EEn, den zugehörigen Stromerzeuger E-Gn als Führungserzeuger an die Stromleitung LS an und fährt diesen entlang eines Anfahrprofils hoch. Die vom Stromerzeuger E-Gn an die Stromleitung LS abgegebene Wechselspannung ändert daher entsprechend dem zugeordneten Anfahrprofil.

Die Steuereinheiten C-G1, C-G2 der weiteren Erzeugereinheiten EE1, EE2 überwachen anhand ihrer Messvorrichtungen M1, M2 Spannungsänderungen auf der Stromleitung hinsichtlich des Auftretens eines Anfahrprofils und schliessen die zugehörigen Stromerzeuger E-G1, E-G2 nach Detektion eines Anfahrprofils und nach Synchronisation mit der Wechselspannung des Anfahrprofils des Führungserzeugers als Folgeerzeuger an die Stromleitung LS an.

Nach Anschluss des wenigstens einen Folgeerzeugers E-G1, E-G2 an die Stromleitung LS werden der Führungserzeuger E-Gn und die Folgeerzeuger E-G1, E-G2 synchron betrieben und die Spannung im Versorgungsnetz VN bzw. an der Stromleitung LS wird nun von allen Stromerzeugern E-G1, E-G2, E-Gn gemeinsam hochgefahren.

Das erfindungsgemässe Verfahren ist in Stromversorgungssystemen SVS generell anwendbar, die Stromerzeuger in beliebigen Ausgestaltungen, wie Synchronmaschinen, Asynchronmaschinen, Umformer oder Umrichter, aufweisen. Die Anfahrprofile der Stromerzeuger können dabei identisch oder individuell an die Stromerzeuger angepasst sein. Die dezentralen Steuereinheiten sind vorzugsweise ausgelegt, für die zugeordneten Stromerzeuger ein passendes Anfahrprofilen festzulegen, das das an die Anfahrprofile der anderen Stromerzeuger angepasst ist. Zwischen den Steuereinheiten wird vor Inbetriebnahme des Versorgungsnetzes SVS vorzugsweise ein gemeinsames Anfahrprofil ausgehandelt und festgelegt, das bei der Inbetriebnahme des Versorgungsnetzes SVS von allen Stromerzeugern in der Funktion als Führungserzeuger oder als Folgeerzeuger angewendet wird.

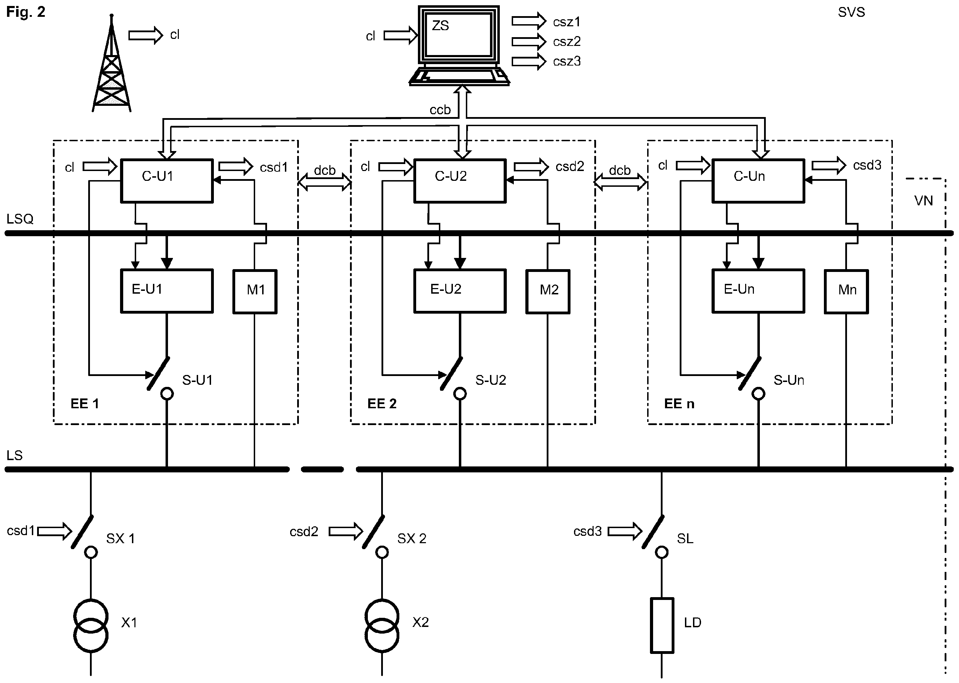

Fig. 2 zeigt das Stromversorgungssystem SVS von Fig. 1 ausgerüstet mit n Stromerzeugern E-U1, E-U2, E-Un in der Ausgestaltung von rotierenden oder statischen Umrichtern oder Umformern, die eingangsseitig an eine der Energieversorgung dienende Versorgungsleitung LSQ angeschlossen und ausgangsseitig über Leistungsschalter S-U1, S-U2, S-Un an die Stromleitung LS anschliessbar sind. Die an der Versorgungsleitung LSQ anliegende Wechselspannung ist bezüglich Spannungshöhe und Frequenz in die Wechselspannung umzuformen, die an der Stromleitung LS anliegt oder benötigt wird.

Das Verfahren zur Inbetriebnahme des Stromversorgungssystems SVS von Fig. 2 entspricht dem Verfahren, welches mit Bezug zu Figur 1 beschrieben wurde. Ein wesentlicher Unterschied zum Stromversorgungssystem SVS von Fig. 1 besteht darin, dass als statische Umrichter ausgebildete Stromerzeuger E-U1, E-U2, E-Un wesentlich kürzere Anfahrprofile aufweisen. Typischerweise können alle Stromerzeuger E-U1, E-U2, E-Un mit einem sehr kurzen Anfahrprofil hochgefahren werden.

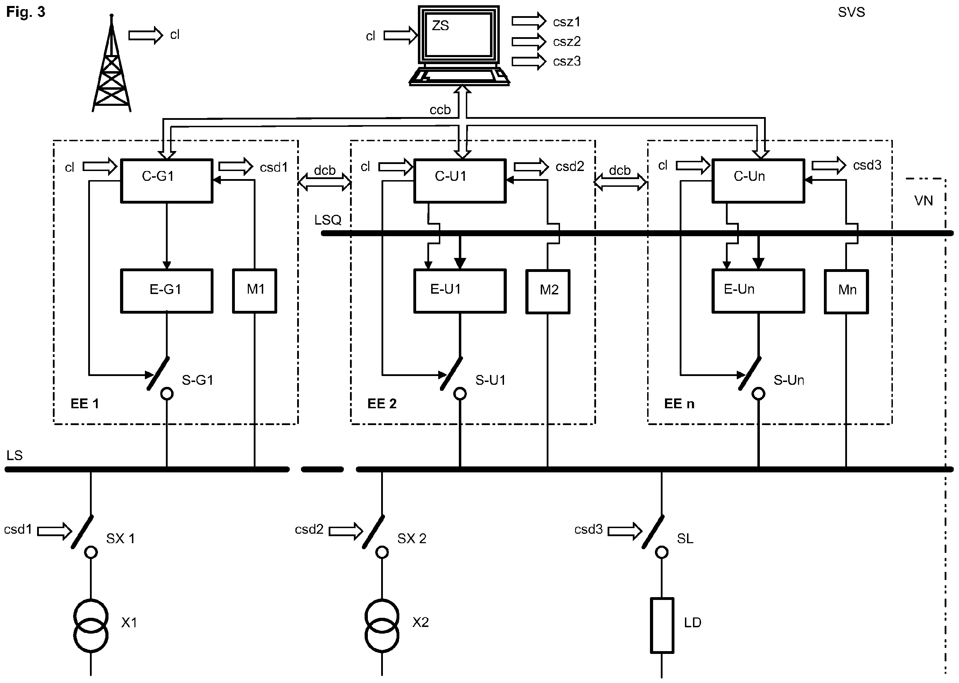

Fig. 3 zeigt ein Stromversorgungssystem SVS, welches einen als rotierende Maschine ausgebildeten Stromerzeuger E-G1 von Fig. 1, der ein relativ langes Anfahrprofil aufweist, und n als Umrichter ausgebildete Stromerzeuger E-U1, E-Un gemäss Fig. 2 umfasst, die relativ kurze Anfahrprofilen aufweisen. Die minimalen Längen der Anfahrprofile der Stromerzeuger E-G1, E-U1, E-Un von Fig. 3 unterscheiden sich daher wesentlich. Die in Fig. 3 gezeigte Mischform mit langsamen Stromerzeugern E-G1 und schnellen Stromerzeugern E-U1, E-Un ist hingegen typisch für existierende Stromversorgungssystemen SVS.

Das 16 2/3 Hz-Netz der Schweizer Bahnstromversorgung zum Beispiel umfasst ein zweiphasiges 132 kV-Leitungsnetz und Umspannwerke, welche die 132 kV Spannung auf die 15 kV Nennspannung für das Oberleitungsnetz transformieren. Das 132 kV-Leitungsnetz entspricht im vorliegenden Ausführungsbeispiel der Versorgungsleitung LSQ. Das Oberleitungsnetz mit 15 kV entspricht im vorliegenden Ausführungsbeispiel der Stromleitung LS. Die Last LD ist beispielsweise eine zuschaltbare Lokomotive. Die Transformatoren X1, X2 liefern beispielsweise Betriebsspannungen für Stellwerke und Bahnhöfe.

Rund 90% der in diesem Netz verbrauchten Energie (2500 GWh) wird von rotierenden Stromerzeugern (U-G1) aus Wasserkraftwerken geliefert. Zwei Drittel der benötigten Energie werden direkt mit der Frequenz von 16 2/3 Hz erzeugt. Wechselspannungen, die mit 50 Hz erzeugt werden, werden hingegen durch Umformer oder Umrichter (E-U1, E-Un ) in die Wechselspannung mit 16 2/3 Hz umgeformt.

Aus Gründen des Last- und Energieausgleichs werden Umrichterstationen eingesetzt, zunächst rotierende und in jüngerer Zeit statische Frequenzumrichter, die das Schweizer 50-Hz-Übertragungsnetz mit der 16 2/3 Hz Bahnstromversorgung koppeln.

Das gesamte Netz sowie die Kraftwerke und Umrichterstationen werden in einer Betriebsleitzentrale ferngesteuert, in der ein integriertes SCADA- und EMS System installiert ist, welches dem erfindungsgemässen Steuersystem ZS entspricht.

Abhängig von den Umständen kann das Stromversorgungssystem SVS von Fig. 3 auf zwei prinzipielle Arten hochgefahren werden.

Sofern die schnellen Stromerzeuger E-U1, E-Un in der Lage sind, die Spannung des Versorgungsnetzes VN allein hochzufahren, so wird auf den als rotierende Maschine ausgebildeten Stromerzeuger E-G1 verzichtet. Die Spannung wird daher nach dem erfindungsgemässen Verfahren durch die schnellen Stromerzeuger E-U1, E-Un mit kurzen Anfahrprofilen hochgefahren. Erst nachdem der Sollwert der Spannung am Versorgungsnetz VN erreicht wurde, wird der als rotierende Maschine ausgebildete Stromerzeuger E-G1 mit der Spannung am Versorgungsnetz VN synchronisiert und zugeschaltet. Damit diese Inbetriebnahme erfolgreich verläuft, werden die Schalter SX1, SX2 und SL von den Steuereinheiten C-G1, C-G2, C-Gn vorzugsweise geöffnet und die Transformatoren X1, X2 und die Lasten LD vom Netz genommen.

Sofern die schnellen Stromerzeuger E-U1, E-Un hingegen nicht in der Lage sind, die Spannung des Versorgungsnetzes VN hochzufahren, beispielsweise weil die Transformatoren X1, X2 zugeschaltet bleiben und hohe Einschaltströme verursachen, wird auch der als rotierende Maschine ausgebildete Stromerzeuger E-G1 für das Hochfahren der Spannung des Versorgungsnetzes VN verwendet. In diesem Fall werden die Anfahrprofile der schnellen Stromerzeuger E-U1, E-Un an das Anfahrprofil des langsamen Stromerzeugers E-G1 angepasst.

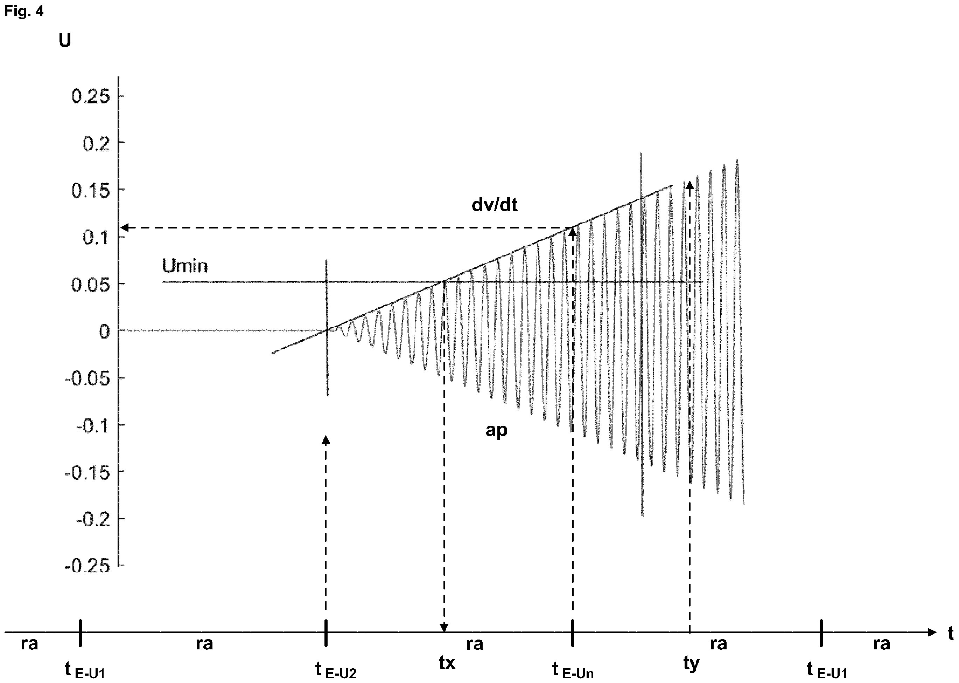

Fig. 4 zeigt ein Anfahrprofil ap eines der Stromerzeuger E-G1, E-G2, E-Gn; E-U1, E-U2, E-Un von Fig. 1, Fig. 2 oder Fig. 3.

Eingezeichnet ist ferner ein Zeitraster mit Startzeitpunkten t_{E-U1}, t_{E-U2}, t_{E-Un}, t_{E-U1}, für die Stromerzeuger E-U1, E-U2, E-Un von Fig. 2, die in diesem Ausführungsbeispiel durch gleichgrosse Rasterabstände ra voneinander getrennt sind und die periodisch wiederholt werden. Die Startzeitpunkte t_{E-U1}; t_{E-U2}; t_{E-U1}, der Stromerzeuger E-U1, E-U2, E-Un sind je durch drei Rasterabstände ra voneinander getrennt. Jeder der Stromerzeuger E-U1, E-U2, E-Un kann daher jeweils nach drei Rasterabständen ra wieder als Führungserzeuger starten.

Exemplarisch ist gezeigt, dass der Stromerzeuger E-U2 zum Zeitpunkt t_{E-U2}; gestartet und durch Betätigung des Schalters S-U2 mit der Stromleitung LS verbunden wurde. Die Ausgangsspannung des Stromerzeugers E-U2 steigt mit der Steigung dv/dt linear an und überschreitet zum Zeitpunkt tx einen Schwellwert Umin. Nach Überschreitung dieses Schwellenwerts Umin erkennen die Steuereinheiten C-U1, C-Un der anderen Stromerzeuger E-U1, E-Un das aufgetretene Anfahrprofil ap. Spannungen unterhalb dieses Schwellenwerts Umin, der beispielsweise bei 5% der Nennspannung liegt, werden ignoriert, da es sich um Störspannungen handeln könnte.

Nach der Detektion des Anfahrprofils ap erkennen die Steuereinheiten C-U1, C-Un anhand der Überwachung des Zeitrasters und der Startzeitpunkte t_{E-U1}; t_{E-U2}; t_{E-Un} der Stromerzeuger E-U1, E-U2, E-Un , dass der Stromerzeuger E-U2 zum Startzeitpunkt t_{E-U2} mit der Stromleitung LS verbunden wurde und die abgegebene Spannung entlang dem Anfahrprofil ap, welches den Steuereinheiten C-U1, C-Un vorzugsweise ebenfalls bekannt ist, geändert hat. Anhand dieser Informationen können die Steuereinheiten C-U1, C-Un die zugeordneten Stromerzeuger E-U1, E-Un rasch mit dem detektierten Anfahrprofil ap synchronisieren und nach erfolgter Synchronisation zum Zeitpunkt ty durch Schliessen der Schalter S-U1, S-Un mit der Stromleitung LS verbinden.

Sofern das Anfahrprofil ap nicht einheitlich und den Steuereinheiten C-U1, C-Un nicht bekannt ist, wird vorzugsweise dessen Steigung bestimmt, wonach, beispielsweise ausgehend vom Startzeitpunkt t_{E-U2}, ein geschätzter Sollwert der Spannung, die vom Führungserzeuger E-U2 abgegeben wird, für einen bestimmten Zeitpunkt ermittelt werden.

Der Verlauf des Anfahrprofils ap kann somit anhand der Steigung oder durch weitere Kurvenanalysen bestimmt und mit gespeicherten Verläufen von Anfahrprofilen verglichen werden, um durch Vergleich mit gespeicherten Anfahrprofilen ap das aktuell realisierte Anfahrprofil ap zu identifizieren. Die Analyse des detektierten Anfahrprofils erfolgt vorzugsweise mittels eines Signalprozessors.

Da die Anfahrprofile der Stromerzeuger E-U1, E-U2, E-Un vorzugsweise aneinander oder an Parameter oder die Konfiguration des Stromversorgungssystems SVS anpassbar und individuell wählbar sind, kann bei der Aktivierung eines Stromerzeugers als Führungserzeuger jeweils ein passendes Anfahrprofil gewählt werden. Durch Analyse des gewählten Anfahrprofils können die weiteren Steuereinheiten C-U1, C-Un feststellen, welches Anfahrprofil gewählt wurde.

Die Stromerzeuger E-U1, E-Un werden zum Zeitpunkt ty zugeschaltet, an dem die Spannung des als Führungserzeuger dienenden Stromerzeugers E-U2 etwa bei 15 % der Nennspannung liegt. Die als Folgeerzeuger dienenden Stromerzeuger E-U1, E-Un können das Hochfahren des als Führungserzeuger dienenden Stromerzeugers E-U2 daher über die verbleibenden 85% des Spannungsbereichs der Nennspannung unterstützen.

Falls die Kommunikation zwischen Erzeugereinheiten EE1, EE2, EEn intakt ist, kann von den Steuereinheiten C-G1, C-G2, C-Gn, C-U1, C-U2, C-Un ein Startzeitpunkt für das gemeinsame synchrone Hochfahren mehrerer Stromerzeuger E-G1, E-G2, E-Gn, E-U1, E-U2, E-Un vereinbart werden. Zu diesem Startzeitpunkt starten daher mehrere Stromerzeuger E-G1, E-G2, E-Gn; E-U1, E-U2, E-Un synchron als Führungserzeuger und fahren die Spannung an der Stromleitung ausgehend vom Spannungsnullpunkt entlang eines gemeinsamen Anfahrprofils hoch. Sofern mehrere E-G1, E-G2, E-Gn; E-U1, E-U2, E-Un unter der Kontrolle einer einzigen Steuereinheit C-G1, C-G2, C-Gn, C-U1, C-U2, C-Un sind, können diese ebenfalls synchronisiert und gemeinsam der Stromleitung LS zugeschaltet werden.

Die Länge der Rasterintervalle wird vorzugsweise derart gewählt, dass stets nur einer der Stromerzeuger E-U1, E-U2, E-Un als Führungserzeuger aktiv und der Stromleitung LS zugeschaltet wird. Eine Fehlzuschaltung wird in jedem Fall vermieden, wenn Rasterintervalle ap gewählt werden, deren Länge oder Dauer grösser ist als die Zeitdauer des Anfahrprofils ap des als Führungserzeuger dienenden Stromerzeugers E-U2.

Beim Ausführungsbeispiel von Fig. 4 ist die Länge der Rasterintervalle ap hingegen grösser gewählt als die Zeitdauer, die abgelaufen ist, bevor das Anfahrprofil ap auf der Stromleitung LS detektierbar ist oder den Schwellwert Umin überschreitet, wonach das Auftreten eines Anfahrprofils ap feststellbar ist. Hingegen ist die Länge der Rasterintervalle ap wesentlich kleiner gewählt als die Länge des gesamten Anfahrprofils ap. Zum Startzeitpunkt t_{E-Un} des Stromerzeugers E-U2 hat die Spannung auf der Stromleitung LS bereits mehr als 10 % der Nennspannung erreicht, sodass genügend Zeit für die dezentrale Steuereinheit C-U2 vorhanden war, um das Anfahrprofil ap zu detektieren. Es ist somit ausgeschlossen, dass die dezentrale Steuereinheit C-U2 den zugehörigen Stromerzeuger E-U2 auch noch als Führungserzeuger an die Stromleitung LS anschliesst. Stattdessen wird die dezentrale Steuereinheit C-U2 den zugehörigen Stromerzeuger E-U2 bereits mit dem detektierten Anfahrprofil ap synchronisieren.

Die Länge der Rasterabstände ra kann konstant oder individuell an die Stromerzeuger E-U1, E-U2, E-Un und deren Anfahrprofile angepasst sein. Für schnellere Stromerzeuger E-U1, E-U2, E-Un werden kürzer Rasterabstände ra und für langsamere Stromerzeuger E-G1, E-G2, E-Gn werden längere Rasterabstände ra vorgesehen. Sofern, wie in Fig. 3 gezeigt, schnelle und langsame Stromerzeuger E-U1, E-U2, E-Un; E-G1, E-G2, E-Gn eingesetzt werden sind die Rasterabstände ra im Zeitraster entsprechend festgelegt.

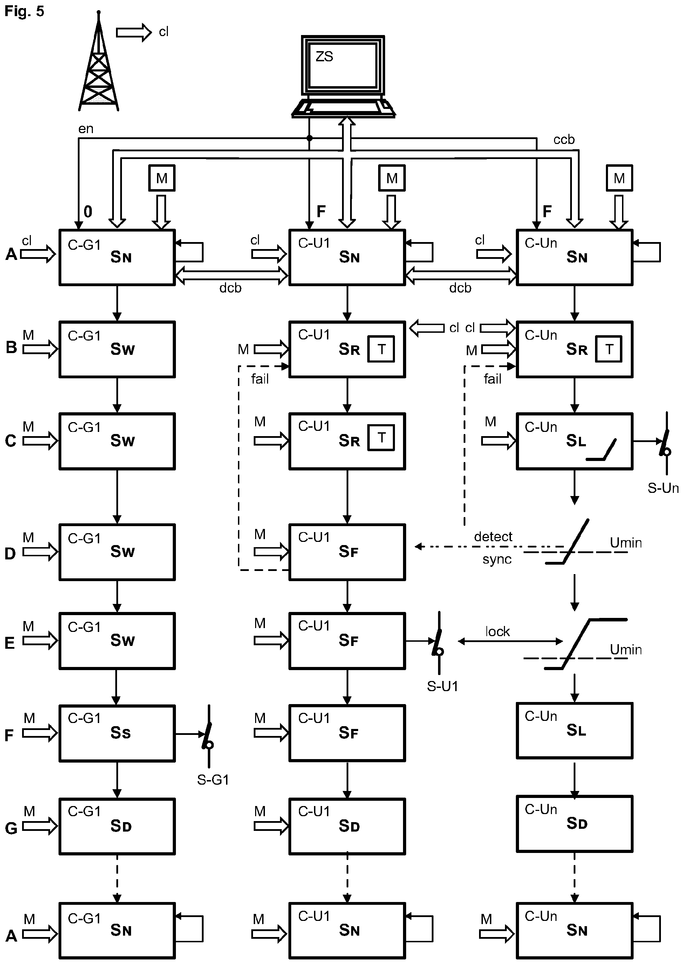

Fig. 5 zeigt exemplarisch einen Ablauf der Inbetriebnahme des Stromversorgungssystems SVS von Fig. 3 nach dem erfindungsgemässen Verfahren.

Gezeigt sind das zentrale Steuersystem ZS und blockweise die Zustände in den Steuereinheiten C-G1, C-U1, C-Un, die in Phasen A - G durchlaufen werden.

Vorbereitend signalisiert das zentrale Steuersystem ZS über eine Leitung en die Freigabe "F" der Steuereinheiten C-U1, C-Un, die schnelle Stromerzeuger E-U1, E-Un steuern, zur allfälligen Durchführung der Inbetriebnahme des Stromversorgungssystems SVS gemäss dem erfindungsgemässen Verfahren. Für die Steuereinheit C-G1, die einen langsamen Stromerzeuger E-G1 steuert, erfolgt keine Freigabe "0". Nur die Stromerzeuger E-U1, E-Un können somit im Bedarfsfall als Führungserzeuger oder als Folgeerzeuger agieren.

Die Freigabe, die mit weiteren Bedingungen verknüpft ist, die oben erläutert wurden, kann auch durch die Steuereinheiten C-G1, C-U1, C-Un selbst bestimmt oder ausgehandelt werden. Beispielsweise erfolgt die Freigabe für die Steuereinheit C-G1, wenn schnelle Stromerzeuger ausgefallen sind oder falls mit hohen Einschaltströme zu rechnen ist.

In Phase A befinden sich alle Steuereinheiten C-G1, C-U1, C-Un im Normalzustand S_{N}. Die Kommunikation zwischen dem zentralen Steuersystem ZS und den dezentralen Steuereinheiten C-G1, C-U1, C-Un ist intakt und die vorgesehene Netzspannung an der Stromleitung SL ist präsent. Es liegt keine Fehlermeldung vor.

In Phase B wurden von den Steuereinheiten C-G1, C-U1, C-Un ein Ausfall der Netzspannung auf der Stromleitung LS sowie ein Ausfall des Kommunikationssystems festgestellt. Weiter wurde festgestellt, dass die betreffenden Erzeugereinheiten EE1, EE2 und EEn fehlerfrei arbeiten.

Die Steuereinheit C-G1, für die keine Freigabe erfolgt ist, wurde in einen Wartezustand Sw versetzt und prüft nun kontinuierlich, ob die Spannung auf der Stromleitung LS den Sollwert erreicht. Die Steuereinheiten C-U1, C-Un wurden in den Bereitschaftszustand S_{R} versetzt und überwachen das vom Timer T generierte Zeitraster hinsichtlich des Auftretens zugeordneter Startzeitpunkte t_{E-U1}, t_{E-U2}, t_{E-Un}, t_{E-U1}.

In Phase C wurde in der Steuereinheit C-Un der Startzeitpunkt t_{E-Un} für den Stromerzeuger E-Un diktiert und der Stromerzeuger E-Un durch Schliessen des Schalters S-Un an die Stromleitung LS angeschlossen und gestartet. Die Steuereinheit C-Un hat den Zustand S_{L} erreicht, in der der zugeordnete Stromerzeuger E-Un als Führungserzeuger agiert. Die vom Stromerzeuger E-Un abgegebene Spannung hat den Schwellwert Umin (siehe Fig. 4) noch nicht erreicht, weshalb die Steuereinheit C-U1 noch kein Anfahrprofil ap und aufgrund des entsprechenden Rasterabstandes ra auch noch keinen zugeordneten Startzeitpunkt t_{E-U1} detektiert hat. Die Steuereinheit C-U1 befindet sich somit noch immer im Bereitschaftszustand S_{R}.

In Phase D hat das Anfahrprofil des Führungserzeugers E-Un den Schwellwert Umin überschritten und wurde von der Steuereinheit C-U1 detektiert (siehe Fig. 5 "detect") und identifiziert, wie dies mit Bezug zu Fig. 4 beschrieben wurde. Die Steuereinheit C-U1 hat daher den Zustand S_{F} (Folgeerzeuger) erreicht und synchronisiert nun den zugeordneten Stromerzeuger E-U1 mit dem detektierten Anfahrprofil ap (siehe Fig. 5 "sync"). Auftretende Startzeitpunkt t_{E-U1} wird von der Steuereinheit C-U1 ignoriert.

In Phase E befindet sich die Steuereinheit C-U1 noch immer im Zustand S_{F} (Folgeerzeuger) und hat die Synchronisation des zugeordneten Stromerzeugers E-U1 abgeschlossen und diesen durch Schliessen des Schalters S-U1 an die Stromleitung LS angeschlossen. Die Spannung an der Stromleitung LS wird nun durch die Stromerzeuger E-U1 und E-Un gemeinsam hochgefahren.

In Phase F haben die Stromerzeuger E-U1, E-Un die Spannung an der Stromleitung LS bis zum Sollwert hochgefahren, befindet sich aber immer noch im Zustand S_{L} (Führungserzeuger) und S_{F} (Folgeerzeuger). Die Steuereinheit C-G1, für die keine Freigabe erfolgt ist, hat festgestellt, dass die Spannung auf der Stromleitung LS den Sollwert erreicht hat. In der Folge wechselt die Steuereinheit C-G1 zum Zustand Ss und synchronisiert den zugeordneten Stromerzeuger C-G1 mit der Wechselspannung der Stromleitung LS und schliesst diesen anschliessend durch Schliessen des Schalters S-G1 an die Stromleitung LS an.

In Phase G sind alle Stromerzeuger E-G1, E-U1, E-Un hochgefahren und die Steuereinheiten C-G1, C-U1, C-Un haben den Zustand S_{D} (normaler dezentraler Betrieb) erreicht, in dem das Stromversorgungssystem SVS dezentral betrieben wird, bis die Kommunikation mit dem zentralen Steuersystem ZS wieder erstellt ist.

Sobald die Kommunikation mit dem zentralen Steuersystem ZS wieder erstellt ist, und gegebenenfalls ein entsprechendes Kommando vom zentralen Steuersystem ZS vorliegt, wechseln die Steuereinheiten C-G1, C-U1, C-Un wieder in den Normalzustand S_{N} und somit zurück in die Prozessphase A.

Sofern während des oben beschriebenen Prozesses hingegen ein Fehler (siehe: Fig. 5 "fail") auftritt, werden die Steuereinheiten C-G1, C-U1, C-Un wieder in den Bereitschaftszustand S_{R} zurückgesetzt.

Das erfindungsgemässe Stromversorgungssystem SVS kann zentralisiert oder dezentralisiert gesteuert werden. Die dezentralen Steuereinheiten C-G1, C-U1, C-Un sind in der Lage, die Spannung im Versorgungsnetz VN wieder zu erstellen und bedarfsweise Schaltungen im Stromversorgungssystem SVS vorzunehmen und dadurch ein Lastmanagement zu vollziehen. Die Übernahme der Kontrolle durch die dezentralen Steuereinheiten C-G1, C-U1, C-Un kann nicht nur bei einem Ausfall des zentralen Steuersystems ZS erfolgen, sondern auch bei dessen Überlastung. Noch bevor ein Netzausfall aufgetreten ist, kann das zentrale Steuersystem ZS, beispielsweise bei einer Überlastung oder bei einem Cyberangriff, die Kontrolle vollständig oder teilweise an die dezentralen Steuereinheiten C-G1, C-U1, C-Un übergeben. Für solche Fälle wird gegebenenfalls eine Beschränkung der Funktionen des Stromversorgungsnetzes auf Kernfunktionen vorgesehen, die es erlauben das Stromversorgungsnetz SVS dezentral zu steuern, ohne dass dezentral Überlastungen auftreten. Entsprechende Instruktionen sind in allen Steuereinheiten C-G1, C-U1, C-Un abgelegt.

Zwischen dem zentralen Steuersystem ZS und den dezentralen Steuereinheiten C-G1, C-U1, C-Un kann bedarfsweise ein Lastmanagement eingerichtet werden. Beispielsweise ist vorgesehen, dass das zentrale Steuersystem ZS die dezentralen Steuereinheiten C-G1, C-U1, C-Un zwischen dem Betriebszustand S_{N} mit Kontrolle der zentralen Steuereinheit ZS und dem Betriebszustand S_{D} mit Kontrolle der dezentralen Steuereinheiten C-G1, C-U1, C-Un wahlweise umschalten kann.

### Literaturverzeichnis

[1] Report into the Low Frequency Demand Disconnection (LFDD) following Generator Trips and Frequency Excursion on 9 Aug 2019, der nationalgridESO, England vom 19.08.2019
[2] A. Pandey, SUGAR-R: Robust Online Restoration Platform for SCADA-Absent Grid, Electrical and Computer Engineering Department, Carnegie Mellon University, Pittsburgh, 2019

## Patentansprüche

1. Verfahren zur Inbetriebnahme eines Stromversorgungssystems (SVS), das ein Versorgungsnetz (VN) mit wenigstens einer Stromleitung (LS) aufweist, an die wenigstens eine erste und ein zweite Erzeugereinheit (EE1, EE2) zuschaltbar sind, wobei
die erste Erzeugereinheit (EE1) einen ersten Stromerzeuger (E-G1; E-U1), der über einen ersten Leistungsschalter (S-G1; S-U1) an die Stromleitung (LS) anschliessbar ist, eine erste Messvorrichtung (M1), die an die Stromleitung (LS) angeschlossen oder anschliessbar ist, und eine erste Steuereinheit (C-G1; C-U1) umfasst, die mit einem Signalausgang der ersten Messvorrichtung (M1) verbunden und zur Betätigung des ersten Leistungsschalters (S-G1; S-U1) vorgesehen ist, und
die zweite Erzeugereinheit (EE2) einen zweiten Stromerzeuger (E-G2; E-U2), der über einen zweiten Leistungsschalter (S-G2; S-U2) an die Stromleitung (LS) anschliessbar ist, eine zweite Messvorrichtung (M2), die an die Stromleitung (LS) angeschlossen oder anschliessbar ist, und eine zweite Steuereinheit (C-G2; C-U2) umfasst, die mit einem Signalausgang der zweiten Messvorrichtung (M2) verbunden und zur Betätigung des zweiten Leistungsschalters (S-G2; S-U2) vorgesehen ist, **dadurch gekennzeichnet,**
**dass** zur Inbetriebnahme des Stromversorgungssystems (SVS)
- die erste Steuereinheit (C-G1; C-U1) den ersten Stromerzeuger (EG1; E-U1) nach einer Freigabe als Führungserzeuger an die Stromleitung (LS) anschliesst und entlang eines Anfahrprofils (ap) hochfährt, und
- **dass** die zweite Steuereinheit (C-G2; C-U2) anhand der zweiten Messvorrichtung (M2) Spannungsänderungen auf der Stromleitung (LS) hinsichtlich des Auftretens eines Anfahrprofils (ap) überwacht und nach Detektion eines Anfahrprofils (ap) den zweiten Stromerzeuger (E-G2; E-U2) mit dem detektierten Anfahrprofil (ap) synchronisiert und nach erfolgter Synchronisation als Folgeerzeuger an die Stromleitung (LS) anschliesst, oder
**dass** zur Inbetriebnahme des Stromversorgungssystems (SVS)
- die zweite Steuereinheit (C-G2; C-U2) den zweiten Stromerzeuger (E-G2; E-U2) nach einer Freigabe als Führungserzeuger an die Stromleitung (LS) anschliesst und entlang eines Anfahrprofils (ap) hochfährt, und
- **dass** die erste Steuereinheit (C-G1; C-U1) anhand der ersten Messvorrichtung (M1) Spannungsänderungen auf der Stromleitung (LS) hinsichtlich des Auftretens eines Anfahrprofils (ap) überwacht und nach Detektion eines Anfahrprofils (ap) den ersten Stromerzeuger (E-G1; E-U1) mit dem detektierten Anfahrprofil (ap) synchronisiert und nach erfolgter Synchronisation als Folgeerzeuger an die Stromleitung (LS) anschliesst.

2. Verfahren nach Anspruch 1, **dadurch gekennzeichnet, dass** der wenigstens eine Folgeerzeuger (E-G2, E-U2; E-G1, E-U1) nach Detektion eines Anfahrprofils (ap) bezüglich Frequenz und Phase synchronisiert wird, wobei eine Wechselspannung mit derselben Amplitude oder einer Amplitude eingestellt wird, die in Abhängigkeit der zugeteilten Last gewählt ist und dass nach Anschluss des wenigstens einen Folgeerzeugers (E-G2, E-U2; E-G1, E-U1) an die Stromleitung (LS) der Führungserzeuger (E-G1, E-U1; E-G2, E-U2) und der wenigstens eine Folgeerzeuger (E-G2, E-U2; E-G1, E-U1) synchron betrieben werden, um die Spannung im Versorgungsnetz (VN) gemeinsam hochzufahren.

3. Verfahren nach Anspruch 1 oder 2, **dadurch gekennzeichnet, dass** ein Startzeitpunkt für wenigstens zwei Stromerzeuger (E-G1, E-G2, E-Gn, E-U1, E-U2, E-Un) vereinbart wird, die nach einer Freigabe zum vereinbarten Startzeitpunkt gemeinsam als Führungserzeuger an die Stromleitung (LS) angeschlossen und entlang eines gemeinsamen Anfahrprofils (ap) synchron hochgefahren werden, welches in der Folge von Steuereinheiten weiterer Stromerzeuger detektierbar ist oder detektiert wird.

4. Verfahren nach Anspruch 1, 2 oder 3, **dadurch gekennzeichnet, dass** die Stromerzeuger (E-G1, E-U1; E-G2, E-U2) Synchronmaschinen, Asynchronmaschinen, Umformer oder Umrichter sind, oder dass die Stromerzeuger (E-G1, E-U1; E-G2, E-U2) Synchronmaschinen, Asynchronmaschinen, Umformer oder Umrichter umfassen und dass die Anfahrprofile der Stromerzeuger (E-G1, E-U1; E-G2, E-U2) identisch oder individuell oder je nach Art des Stromerzeugers (E-G1, E-U1; E-G2, E-U2) festgelegt sind.

5. Verfahren nach einem der Ansprüche 1 - 4, **dadurch gekennzeichnet, dass** ein Schwellwert (Umin) für die Spannungsänderungen auf der Stromleitung (LS) vorgesehen wird, dessen Überschreiten detektiert wird und nach dessen Überschreiten das Auftreten eines Anfahrprofils (ap) festgestellt wird.

6. Verfahren nach einem der Ansprüche 1 - 5, **dadurch gekennzeichnet,**
**dass** für wenigstens einen Stromerzeuger (E-G1, E-U1; E-G2, E-U2) ein Anfahrprofil vorgesehen oder eines von mehreren Anfahrprofilen wählbar oder wahlweise einstellbar ist; oder
**dass** für wenigstens einen Stromerzeuger (E-G1, E-U1; E-G2, E-U2) ein Anfahrprofil vorgesehen oder eines von mehreren Anfahrprofilen wählbar oder wahlweise einstellbar ist, und dass der Verlauf oder die Steigung der Spannungsänderungen auf der Stromleitung (LS) ermittelt und mit den Verläufen oder Steigungen von möglicherweise auf der Stromleitung (LS) auftretenden Anfahrprofilen verglichen, um das Anfahrprofil (ap) des Führungserzeugers zu identifizieren und das Anfahrprofil (ap) des wenigstens einen Folgeerzeugers an das Anfahrprofil (ap) des Führungserzeugers anzupassen.

7. Verfahren nach einem der Ansprüche 1 - 6, **dadurch gekennzeichnet, dass** Stromerzeuger (E-G1, E-U1; E-G2, E-U2) mit einem kürzeren Anfahrprofil (ap) und Stromerzeuger (E-G1, E-U1; E-G2, E-U2) mit einem längeren Anfahrprofil (ap) vorgesehen sind und dass zur Inbetriebnahme des Stromversorgungssystems (SVS) in einer ersten Phase nur Stromerzeuger (E-G1, E-U1; E-G2, E-U2) mit dem kürzeren Anfahrprofil (ap) verwendet werden und dass die Stromerzeuger (E-G1, E-U1; E-G2, E-U2) mit einem längeren Anfahrprofil (ap) erst synchronisiert und an die Stromleitung (LS) angeschlossen werden, wenn die Stromerzeuger (E-G1, E-U1; E-G2, E-U2) mit einem kürzeren Anfahrprofil (ap) ihr Anfahrprofil (ap) ganz oder teilweise durchlaufen haben.

8. Verfahren nach einem der Ansprüche 1 - 7, **dadurch gekennzeichnet,**
**dass** im Stromversorgungssystem (SVS) ein Zeitraster mit je durch ein Rasterintervall (ap) voneinander getrennten benachbarten Startzeitpunkten vorgesehen wird,
**dass** jedem der Stromerzeuger (E-G1, E-U1; E-G2, E-U2) individuell eine nur einmal vergebene Folge von periodisch auftretenden Startzeitpunkten zugeordnet wird, die durch wenigstens zwei Rasterintervalle (ap) voneinander getrennt sind und die den Stromerzeugern (E-G1, E-U1; E-G2, E-U2) als Startzeitpunkte für das Anfahren als Führungserzeuger dienen, und
**dass** in den Steuereinheiten (C-G1, C-U1; C-G2; C-U2) Timer (T) vorgesehen sind, welche dem zugeordneten Stromerzeuger (E-G1, E-U1; EG2, E-U2) die Startzeitpunkte für das Anfahren als Führungserzeuger signalisieren.

9. Verfahren nach Anspruch 8, **dadurch gekennzeichnet, dass** die Timer (T) der Steuereinheiten (C-G1, C-U1; C-G2; C-U2) durch ein externes Taktsignal oder Zeitsignal (cl) synchronisiert werden.

10. Verfahren nach Anspruch 8 oder 9, **dadurch gekennzeichnet,**
**dass** zur Synchronisation des wenigsten einen Folgeerzeugers (E-G2, E-U2; E-G1, E-U1) nach Detektion eines Anfahrprofils (ap) unter Berücksichtigung des Zeitrasters und der Art des Anfahrprofils (ap) der Startzeitpunkt des Anfahrprofils (ap) identifiziert, der Stand des Anfahrprofils (ap) ermittelt und der wenigstens eine Folgeerzeuger (EG2, E-U2; E-G1, E-U1) auf den ermittelten Stand des Anfahrprofils (ap) gebracht wird; oder
**dass** zur Synchronisation des wenigstens einen Folgeerzeugers (E-G2, E-U2; E-G1, E-U1) nach Detektion eines Anfahrprofils (ap) unter Berücksichtigung des Zeitrasters der Führungserzeuger (E-G1, E-U1; EG2, E-U2), die dem Führungserzeuger (E-G1, E-U1; E-G2, E-U2) zugehörige Art des Anfahrprofils (ap) sowie der Startzeitpunkt des Anfahrprofils (ap) identifiziert, der Stand des Anfahrprofils (ap) ermittelt und der wenigstens eine Folgeerzeuger (E-G1, E-U1; E-G2, E-U2) auf den ermittelten Stand des Anfahrprofils (ap) gebracht wird.

11. Verfahren nach Anspruch 8, 9 oder 10, **dadurch gekennzeichnet,**
a) **dass** das Rasterintervall (ap) derart gewählt ist, dass stets nur einer der Stromerzeuger (E-G1, E-U1; E-G2, E-U2) als Führungserzeuger aktiv wird, oder
b) **dass** das Rasterintervall (ap) grösser ist als die Zeitdauer des Anfahrprofils (ap) des als Führungserzeuger dienenden Stromerzeugers (E-G1, E-U1; E-G2, E-U2), oder
c) **dass** das Rasterintervall (ap) grösser ist als die Zeitdauer, die abgelaufen ist, bevor das Anfahrprofil (ap) auf der Stromleitung (LS) detektierbar ist.

12. Verfahren nach einem der Ansprüche 8 - 11, **dadurch gekennzeichnet, dass** die Länge der Rasterintervalle (ap) in Abhängigkeit der Art der Stromerzeuger (E-G1, E-U1; E-G2, E-U2) oder der den Stromerzeugern (EG1, E-U1; E-G2, E-U2) zugeordneten Anfahrprofile individuell oder einheitlich gewählt wird, wobei das einheitlich gewählte Rasterintervall (ap) entsprechend dem Anfahrprofil (ap) festgelegt wird, dass die grösste Länge aufweist.

13. Verfahren nach einem der Ansprüche 1 - 13, **dadurch gekennzeichnet, dass** ein zentrales Steuersystem (ZS) vorgesehen ist, das durch Kommunikationsleitungen mit den Erzeugereinheiten (EE1, EE2) verbunden ist und dass die Inbetriebnahme des Stromversorgungssystems (SVS) gesteuert durch die Steuereinheiten (C-G1, C-U1; C-G2; C-U2) erfolgt, falls ein entsprechender Befehl des zentralen Steuersystems (ZS) vorliegt oder die Kommunikation zwischen dem zentralen Steuersystem (ZS) und den Steuereinheiten (C-G1, C-U1; C-G2; C-U2) ganz oder teilweise ausgefallen ist.

14. Verfahren nach einem der Ansprüche 1 -13, **dadurch gekennzeichnet,**
a) **dass** vor Inbetriebnahme des Stromversorgungssystems (SVS), die Lasten (LD) und/oder Transformatoren (X1, X2) von der Stromleitung (LS) getrennt und erst nach Durchlaufen des Anfahrprofils (ap) der Stromleitung (LS) zugeschaltet werden, oder
b) **dass** ausgewählte Lasten (LD) und/oder Transformatoren (X1, X2) vor Inbetriebnahme des Stromversorgungssystems (SVS) der Stromleitung (LS) zugeschaltet werden, oder
c) **dass** ausgewählte Lasten (LD) und/oder Transformatoren (X1, X2) nach Detektion eines Anfahrprofils (ap) der Stromleitung (LS) zugeschaltet werden,
wobei die Schaltvorgänge zentral durch das zentrale Steuersystem (ZS) oder dezentral durch eine der Steuereinheiten (C-G1, C-U1; C-G2, C-U1) durchgeführt werden.

15. Stromversorgungssystem (SVS) betrieben mit einem Betriebsverfahren nach einem der Ansprüche 1 - 14.
